# EUROPÄISCHE PATENTANMELDUNG

(11) **EP 2 002 907 A2**
(43) Veröffentlichungstag der Anmeldung: **17.12.2008**
(21) Anmeldenummer: 08010000.1
(22) Anmeldetag: 31.05.2008
(51) Int. Cl.: B21D 1/02, F16H 35/10, F16H 57/02, F16H 59/16

(54) **Getriebeanordnung und Richtmaschine mit einer solchen**

(30) Priorität: 15.06.2007 DE 202007008589 U
(71) Anmelder: Kohler Maschinenbau GmbH, 77948 Friesenheim (DE)
(72) Erfinder: Schäfer, Bernhard, 77743, Neuried (DE); Leser, Wolfgang, 77933, Lahr (DE)
(74) Vertreter: Lemcke, Brommer & Partner

(57) **Zusammenfassung**

Eine Getriebeanordnung (3), insbesondere für eine Richtmaschine (1), mit wenigstens einem Antrieb (5)und einer Anzahl von Abtrieben (7.1,...), die für eine Drehmomentübertragung mit dem Antrieb (5) in Wirkverbindung stehen, zeichnet sich dadurch aus, dass wenigstens ein Abtrieb (7.2, 7.5) unabhängig von anderen Abtrieben mit einer Drehmomentüberwachungseinrichtung (10.2, 10.5) zum Überwachen eines an dem betreffenden Abtrieb (7.2, 7.5) wirksamen Abtriebsmoments gekoppelt ist und dass die Drehmomentüberwachungseinrichtung (10.2, 10.5) zum Ausgeben eines Steuersignals (SS2, SS5) in Abhängigkeit von einem Ergebnis der Abtriebsmomentüberwachung ausgebildet ist.

## Beschreibung

Die vorliegende Erfindung betrifft eine Getriebeanordnung, insbesondere für eine Richtmaschine mit wenigstens einem Antrieb mit einer Anzahl von Abtrieben, die für eine Drehmomentübertragung mit dem Antrieb in Wirkverbindung stehen.

Weiterhin betrifft die vorliegende Erfindung eine Richtmaschine zum Richten insbesondere platten- oder bandförmiger Materialien, die eine Anordnung von Richtwalzen aufweist, zwischen denen das zu richtende Material hindurchgefördert wird und die über Gelenkwellen angetrieben werden, die mit einer Getriebeanordnung verbunden sind.

In der industriellen Praxis werden bestimmte Materialien, wie Bleche oder dergleichen, vorzugsweise in einem aufgerollten Zustand in Form so genannter Coils bevorratet. Vor einer Weiterverarbeitung ist es dabei regelmäßig erforderlich, das Material nach dem Abwickeln von dem Coil zu richten, das heißt wieder eben zu machen oder zu glätten. Zu diesem Zweck kommen Richtmaschinen zum Einsatz, bei denen das zu richtende Material zwischen Richtwalzen hindurchgefördert wird, zwischen denen das Material umgeformt wird, so dass es eine die Richtwalzen umfassende Richtstrecke der Richtmaschine im Wesentlichen glatt (eben), das heißt gerichtet wieder verlässt.

Wie eingangs ausgeführt wurde, weist eine Richtmaschine zu diesem Zweck eine Getriebeanordnung auf, in der das durch einen Antrieb gelieferte Drehmoment auf eine Anzahl von Abtrieben verteilt wird, die über Gelenkwellen mit den Richtwalzen verbunden sind, um diese zum Fördern und Umformen des Materials anzutreiben.

Die in diesem Zusammenhang eingesetzten Gelenkwellen sind oft das schwächste Glied einer derartigen Richtmaschine. Bei deren Betrieb kann es im Zuge von Betriebsstörungen vorkommen, dass an einzelnen Abtrieben und damit an den zugehörigen Gelenkwellen stark überhöhte Drehmomente wirksam sind, was zu einer Beschädigung oder gar Zerstörung der entsprechenden Gelenkwellen führen kann. Dies macht eine aufwändige Reparatur der Richtmaschine erforderlich und verursacht zudem weitere Kosten aufgrund des Maschinenstillstands. Betriebsstörungen, die sich derart zerstörerisch auf die Gelenkwellen der Richtmaschine auswirken können, entstehen unter anderem durch Einziehen einer mehrfachen, insbesonderen doppelten Materiallage in die Richtstrecke, eine Verschmutzung oder Beschädigung des zu richtenden Materials sowie ein Sichaufschaukeln des schwingungsfähigen Systems aus Antrieb, Abtrieben, Gelenkwellen und Richtwalzen, was überraschender Weise und bislang unkontrollierbar zu stark überhöhten Drehmomenten führen kann.

Aus diesem Grund ist es aus dem Stand der Technik bekannt, an einem Verteilerrad der Getriebeanordnung über miteinander in Wechselwirkung stehende Schrägverzahnungen ein wirksames Abtriebsdrehmoment in eine Axialbewegung umzuwandeln, die ein Maß für das Drehmoment darstellt. Die Axialbewegung erfolgt dabei gegen eine Federvorspannung, so dass bei Überschreiten einer gewissen Grenzbelastung durch Schließen eines entsprechenden Kontakts eine Abschaltung der Richtmaschine erfolgt. Nachteilig bei dieser Lösung ist, dass an dem Verteilerrad lediglich das Summendrehmoment einer Mehrzahl, insbesondere von vier bis fünf Abtrieben gemessen wird. Das Schwingungsverhalten der Richtmaschine bewirkt allerdings, dass die Einzeldrehmomente an den einzelnen Gelenkwellen bzw. Abtrieben mitunter signifikant höher sind als das überwachte Summendrehmoment am Verteilerrad. Eine zuverlässige Abschaltung der Richtmaschine ist nach diesem Stand der Technik also kaum möglich.

Alternative Lösungswege verwenden eine indirekte Drehmomentüberwachung mittels Dehnmessstreifen oder Torsionswellen an den Gelenkwellen selbst, was sich entsprechend kostenaufwändig gestaltet. Zusätzlich ist auch der Einsatz von Rutschkupplungen bekannt, die jedoch nachteiligerweise verschleißbehaftet sind.

Der Erfindung liegt die Aufgabe zugrunde, eine Getriebeanordnung und eine Richtmaschine der jeweils eingangs genannten Art anzugeben, mit bzw. bei denen eine zuverlässige Überlastsicherung zur Vermeidung von Reparaturkosten und Maschinenstillstand, insbesondere im Falle der weiter oben genannten Betriebsstörungen, erreichbar ist.

Die Aufgabe wird mittels einer Getriebeanordnung mit den Merkmalen des Schutzanspruchs 1 und mittels einer Richtmaschine mit den Merkmalen des Schutzanspruchs 11 gelöst.

Vorteilhafte Weiterbildungen der Erfindungsgegenstände sind jeweils Gegenstand von Unteransprüchen, deren Wortlaut hiermit durch ausdrückliche Bezugnahme in die Beschreibung aufgenommen wird, um unnötige Textwiederholungen zu vermeiden.

Gemäß einem ersten Aspekt der vorliegenden Erfindung ist eine Getriebeanordnung, insbesondere für eine Richtmaschine, mit wenigstens einem Antrieb und einer Anzahl von Abtrieben, die für eine Drehmomentübertragung mit dem Antrieb in Wirkverbindung stehen, dadurch gekennzeichnet, dass wenigstens ein Abtrieb unabhängig von anderen Abtrieben mit einer Drehmomentüberwachungseinrichtung zum Überwachen eines an dem betreffenden Abtrieb wirksamen Abtriebsmoments gekoppelt ist und dass die Drehmomentüberwachungseinrichtung zum Ausgeben eines Steuersignals in Abhängigkeit von einem Ergebnis der Abtriebsmomentüberwachung ausgebildet ist.

Gemäß einem weiteren Aspekt der vorliegenden Erfindung ist eine Richtmaschine zum Richten insbesondere platten- oder bandförmiger Materialien, aufweisend eine Anordnung von Richtwalzen, zwischen denen das zu richtende Material hindurch gefördert wird und die über Drehmomentübertragungsmittel, insbesondere Gelenkwellen angetrieben werden, die mit einer Getriebeanordnung verbunden sind, dadurch gekennzeichnet, dass die Getriebeanordnung gemäß dem ersten Aspekt der vorliegenden Erfindung ausgebildet ist.

Gemäß einer Ausgestaltung der vorliegenden Erfindung ist der wenigstens eine überwachte Abtrieb der Getriebeanordnung von weiteren Abtrieben derselben entkoppelt, um das wirksame Drehmoment an dem einen Abtrieb unabhängig von den anderen Abtrieben zu messen, während herkömmlicherweise nur die Summe wirksamer Abtriebsmomente gemessen wird.

Bei einer weiteren Ausgestaltung der Erfindung weist die Getriebeanordnung (Verteilergetriebe) an wenigstens einem Abtrieb eine Schrägverzahnung auf, so dass ein dort wirksames Drehmoment proportional zu einer entstehenden Axialkraft ist, die insbesondere mittels einer Druckmessdose gemessen wird. Die entsprechende Abtriebswelle fungiert somit als Messwelle oder Messabtriebswelle und ist in Wirkverbindung mit einer entsprechenden Druckmesseinrichtung, beispielsweise Druckmessdose gelagert, wobei die Lagerung ein Axialspiel aufweist.

Bei einer besonderen Ausgestaltung der Erfindung erfolgt die Lagerung der Messabtriebswelle über Wälzlager, so dass Axial- und Radiallagerung getrennt sind und die Axialbewegung hiervon unbeeinflusst ablaufen kann.

Gemäß einer anderen Ausgestaltung der vorliegenden Erfindung weist die Richtmaschine eine Anordnung von Richtwalzen auf, die in Form eines Walzenstuhls im Wesentlichen in zwei Ebenen angeordnet sind, die unter einem endlichen Winkel zueinander verlaufen. Zwischen diesen beiden Richtwalzenebenen wird ein zu richtendes Material hindurchgefördert, wobei in Weiterbildung der vorliegenden Erfindung vorteilhafterweise die in Förderrichtung des zu richtenden Materials zweiten und fünften Walzen hinsichtlich des auf sie bzw. eine zugehörige Gelenkwelle wirkenden Drehmoments überwacht werden. Erfahrungsgemäß ist die fünfte Richtwalze am stärksten belastet, da hier die größte Umformarbeit geleistet wird, während an der zweiten Walze normalerweise kaum ein Rück-Drehmoment auftritt. Dies ist insbesondere dadurch bedingt, dass die ersten bis dritten Richtwalzen nur leicht angestellt sind, um einen störungsfreien Einlauf des zu richtenden Materials in die Richtstrecke zu gewährleisten. An der in Förderrichtung des zu richtenden Materials zweiten Richtwalze tritt jedoch insbesondere dann ein erhöhtes Drehmoment auf, wenn irrtümlicher Weise mehr als nur eine Lage des zu richtenden Materials eingezogen wird. Eine Überwachung des Drehmoments an dieser Walze bzw. dem zugehörigen Abtrieb kann also beispielsweise zur Doppelblechschutzabschaltung verwendet werden.

Die vorstehenden Aussagen beziehen sich auf eine Richtwalzenanordnung, bei der die zweite Walze gegenüber den anderen Walzen der entsprechenden Walzenebene abgesetzt ist. Ist die zweite Walze dagegen nicht abgesetzt, sieht eine entsprechende Ausgestaltung der vorliegenden Erfindung vor, dass dann statt der fünften die in Förderrichtung dritte Walze überwacht wird.

Wenn aufgrund der axialen Bewegung einer Messabtriebswelle eine mögliche Überlastung der zugehörigen Gelenkwelle erkannt wird, erzeugt die zugeordnete Drehmomentüberwachungseinrichtung vorzugsweise ein Steuersignal, durch das die Richtmaschine, insbesondere eine Antriebseinheit derselben, umgehend abgeschaltet wird. Somit kann eine Überlastungsursache beseitigt werden, bevor es zu einer aufwändig zu reparierenden Beschädigung von Gelenkwellen kommt.

Weitere Eigenschaften und Vorteile der vorliegenden Erfindung ergeben sich aus der nachfolgenden Beschreibung von Ausführungsbeispielen anhand der Zeichnung. Es zeigt:
- Figur 1: ein schematisches Blockschaltbild einer erfindungsgemäßen Richt-maschine;
- Figur 2: eine schematische Frontansicht einer Richtstrecke der Richtmaschine in Figur 1;
- Figur 3: eine erste Frontansicht einer Getriebeanordnung der Richtmaschine in Figur 1;
- Figur 4: einen Schnitt entlang der Linie A-A in Figur 3;
- Figur 5: eine vergrößerte Detaildarstellung der Figur 4;
- Figur 6: einen Schnitt entlang der Linie B-B in Figur 3;
- Figur 7: einen Schnitt entlang der Linie C-C in Figur 3;
- Figur 8: eine erste Teilansicht zur Darstellung der Kopplung von Antrieb und Abtrieben bei der Getriebeanordnung gemäß den Figuren 3 bis 7;
- Figur 9: eine weitere schematische Darstellung der Kopplungsverhältnisse von Antrieben und Abtrieben bei der Getriebeanordnung gemäß den Figuren 3 bis 7; und
- Figur 10: eine Seitenansicht der Getriebeanordnung in Figur 1.

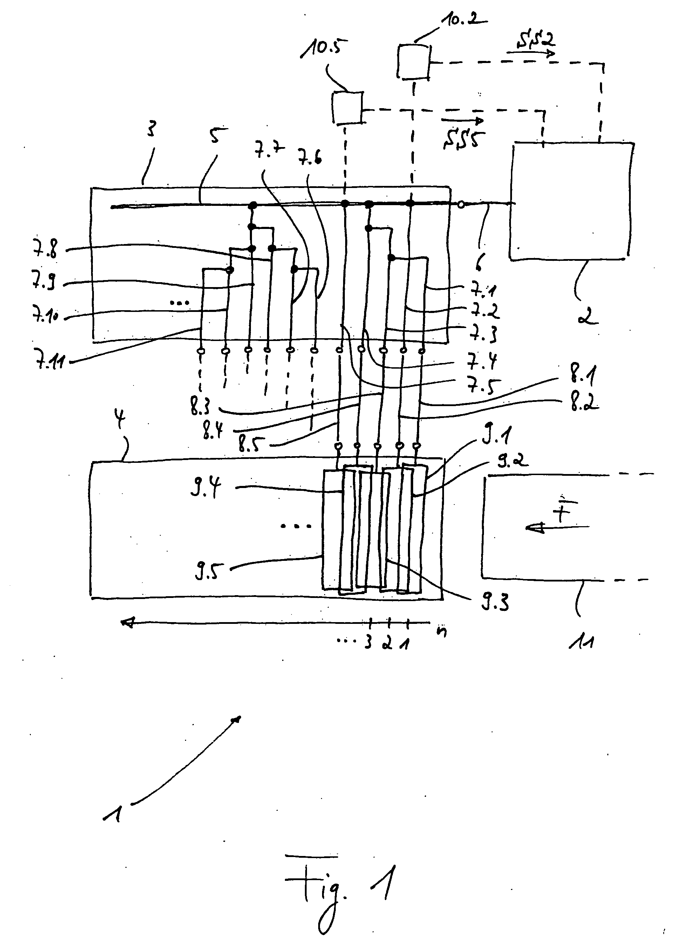

Figur 1 zeigt anhand eines schematischen Blockschaltbilds eine Richtmaschine 1. Die Richtmaschine 1 umfasst eine Antriebseinheit 2, eine Getriebeanordnung 3 und eine Richtstrecke 4. Die Getriebeanordnung 3 weist einen Antrieb 5 auf, der über ein geeignetes Verbindungsmittel 6, insbesondere eine Welle, mit der Antriebseinheit 2 der Richtmaschine 1 verbunden ist. In mechanischer Wirkverbindung oder Kopplung mit dem Antrieb 5 weist die Getriebeanordnung 6 eine Anzahl von Abtrieben 7.1, ..., 7.n auf, an denen ein von der Antriebseinheit 2 über den Antrieb 5 der Getriebeanordnung 3 bereitgestelltes Drehmoment - gegebenenfalls nach geeigneter Über- oder Untersetzung - abgegriffen werden kann. Jeder der Abtriebe 7.1, ... ist über ein zugeordnetes Verbindungsmittel in Form einer Gelenkwelle 8.1, ... mit einer entsprechenden Richtwalze 9.1, ... der Richtstrecke 4 verbunden, die dementsprechend als Walzenstuhl ausgebildet ist.

Während die meisten Abtriebe 7.1, ... der Getriebeanordnung 3 zum Verteilen des von der Antriebseinheit 2 gelieferten Drehmoments kaskadenartig miteinander gekoppelt sind, sind der zweite und fünfte Abtrieb 7.2 bzw. 7.5 der Getriebeanordnung 3 direkt mit dem Antrieb 5 gekoppelt und weisen keinerlei parallel und/oder nachgeschaltete weitere Abtriebe auf. Mit anderen Worten, die Abtriebe 7.2, 7.5 sind von den weiteren Abtrieben der Getriebeanordnung 3 unabhängig.

Die genannten zweiten und fünften Abtriebe 7.2, 7.5 der Getriebeanordnung 3 stehen in Wirkverbindung mit einer jeweils zugeordneten Drehmomentüberwachungseinrichtung 10.2 bzw. 10.5, was in Figur 1 mittels gestrichelter Linien symbolisiert ist. Die Drehmomentüberwachungseinrichtungen 10.2, 10.5 sind ihrerseits mit der Antriebseinheit 2 steuerungstechnisch verbunden.

Die Drehmomentüberwachungseinrichtung 10.2, 10.5 sind dazu ausgebildet, die gemäß der vorstehenden Erläuterung unabhängigen Abtriebe 7.2, 7.5 der Getriebeanordnung 3 auf das Auftreten sehr hoher oder überhöhter Drehmomente zu überwachen, welche unter Umständen zu einer Zerstörung der entsprechenden Gelenkwellen 8.2, 8.5 führen könnten. Erkennt eine der Drehmomentüberwachungseinrichtungen 10.2, 10.5 das Auftreten eines derartigen Drehmoments, so erzeugt sie ein entsprechendes Steuersignal SS2 bzw. SS5, das gemäß der vorliegenden Ausgestaltung zum Steuern der Antriebseinheit 2, insbesondere zu deren unmittelbarer Abschaltung verwendet wird. Insbesondere wird das Steuersignal SS2, SS5 durch die betreffende Drehmomentüberwachungseinrichtung 10.2 bzw. 10.5 dann erzeugt, wenn der für die entsprechende Gelenkwelle gemessene Wert für das momentan wirksame Drehmoment den maßgeblichen Maximalwert für das Drehmoment (Abtriebsmoment) übersteigt. Mögliche Betriebsstörungen umfassen in diesem Zusammenhang insbesondere das gleichzeitige Einziehen einer Mehrzahl zu richtender Materialien 11 in die Richtstrecke 4, Verschmutzungen oder Beschädigungen des zu richtenden Materials 11 sowie ein Sichaufschaukeln des schwingungsfähigen Systems aus Antrieb 5, Abtrieben 7.1, ... der Getriebeanordnung 3, Gelenkwellen 8.1, ... und Richtwalzen, wobei an einzelnen Richtwalzen 9.1, ... bzw. den betreffenden Gelenkwellen 8.1, ... extrem hohe Drehmomente auftreten können, die möglicherweise eine Beschädigung der Gelenkwellen 8.1, ... verursachen.

Um einer derartigen Beschädigung entgegenzuwirken bzw. zuvorzukommen, stehen - wie bereits kurz erwähnt - ausgewählte Abtriebe 7.2, 7.5 der Getriebeanordnung 3, die von den anderen Abtrieben weitestgehend entkoppelt sind, mit den Drehmomentüberwachungseinrichtungen 10.2, 10.5 in Verbindung, die bei Überschreiten eines für die betreffenden Gelenkwellen 8.2, 8.5 zulässigen Maximaldrehmoments das betreffende Steuersignal SS2, SS5 erzeugen, wodurch unmittelbar eine Abschaltung der Antriebseinheit 2 bewirkt ist, so dass es zu keiner Beschädigung der Richtmaschine 1, insbesondere im Bereich der Gelenkwellen 8.1, ... kommt. Da vorliegend solche Abtriebe 7.2, 7.5 der Getriebeanordnung 3 überwacht werden, die von anderen Abtrieben der Getriebeanordnung 3 im Wesentlichen entkoppelt sind, lässt sich eine sehr genaue, gezielte und zuverlässige Überlastabschaltung der Richtmaschine 1 erzielen.

Auf die genaueren Umstände für die Wahl insbesondere der in Förderrichtung F zweiten und fünften Abtriebe 7.5 der Getriebeanordnung 3 für die Drehmomentüberwachung wird weiter unten noch genauer eingegangen.

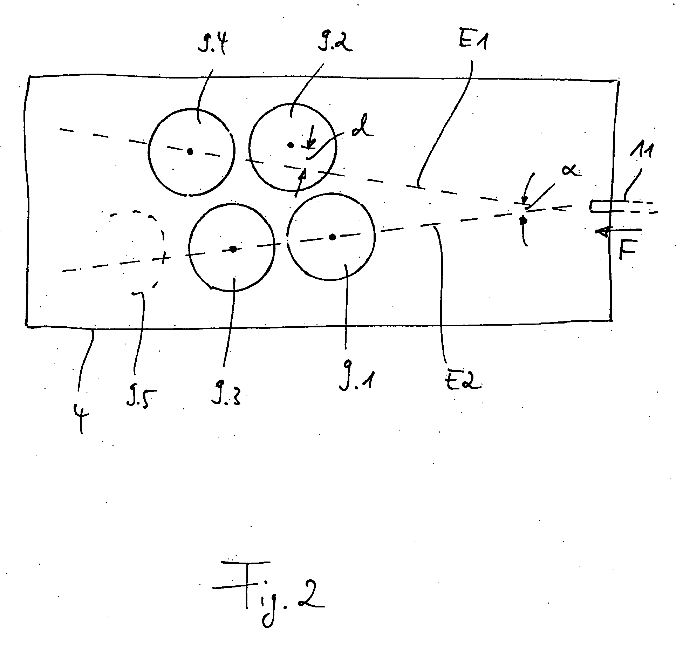

Die Figur 2 zeigt eine schematische Frontansicht der Richtstrecke 4 in Figur 1. Wie der Darstellung in Figur 2 zu entnehmen ist, sind die Richtwalzen 9.1, ... in zwei Gruppen mit jeweils gruppenweise parallelen Walzenachsen angeordnet, wobei die Walzenachsen einer Gruppe jeweils in einer gemeinsamen Ebene liegen. Vorliegend bezeichnet die Ebene E1 die gemeinsame Richtwalzenebene der in Förderrichtung F geradzahligen Richtwalzen 9.4, 9.6, ..., während die Ebene E2 die Walzenachsenebene der in Förderrichtung F ungeradzahligen Richtwalzen 9.1, 9.3, ... bezeichnet. Die Ebenen E1 und E2 schließen einen endlichen Winkel α ein, der auch als Zustellwinkel bezeichnet wird.

Wie aus der Darstellung in Figur 2 weiterhin zu entnehmen ist, ist die in Förderrichtung F zweite Richtwalze 9.2 gegenüber der Ebene E1 parallel um ein Maß d nach oben verschoben angeordnet.

Die Richtwalzen 9.1, ... der Richtstrecke 4 dienen in an sich bekannter Weise zum Richten des Materials 11, welches in Förderrichtung F zwischen den genannten Walzengruppen hindurch durch die Richtstrecke 4 transportiert wird. Dabei sorgen die in Förderrichtung F ersten bis dritten Richtwalzen 9.1 - 9.3 im Wesentlichen für einen störungsfreien Einlauf des zu richtenden Materials 11 in die Richtstrecke, während die wesentliche Richtarbeit durch die in Förderrichtung F vierten und fünften Richtwalzen 9.4, 9.5 ausgeübt wird.

Bei der gezeigten Ausgestaltung sind die zweiten und fünften Richtwalzen 9.2 bzw. 9.5, das heißt die entsprechenden Abtriebe 7.2 bzw. 7.5 der Getriebeanordnung 3 (vgl. Figur 1) mit entsprechenden Drehmomentüberwachungseinrichtungen verbunden. Diese Wahl ist dadurch motiviert, dass die zweite Richtwalze 9.2 im normalen Betrieb der Richtmaschine kaum Drehmoment erfährt; ein möglicherweise schädliches, erhöhtes Drehmoment tritt an dieser Walze nur auf, wenn im vorliegenden Fall beispielsweise eine doppelte Lage des Materials 11, insbesondere ein Doppelblech, in die Richtstrecke 4 eingebracht wird. Eine entsprechende Drehmomentüberwachung an der zweiten Richtwalze 9.2 fungiert somit beispielsweise als Doppelblechschutz und sorgt gegebenenfalls für eine Abschaltung der Antriebseinheit 2 (vgl. Figur 1) der Richtmaschine 1, bevor es zu einer Beschädigung derselben kommt. Die in Förderrichtung F fünfte Richtwalze 9.5 ist erfahrungsgemäß während des Richtprozesses am stärksten belastet, da hier die größte Umformarbeit auftritt. Aus diesem Grund ist eine Drehmomentüberwachung in Verbindung mit dieser Walze weiterhin besonders gut geeignet, einen sicheren Betrieb der erfindungsgemäßen Richtmaschine zu gewährleisten, insbesondere bei Fehleinstellungen der Walzenzustellung durch den Bediener und bei Verwendung von zu großen Richtquerschnitten.

Wenn die zweite Richtwalze 9.2 anders als beim Gegenstand der Figur 2 nicht nach oben abgesetzt ist, kann im Rahmen einer alternativen Ausgestaltung vorgesehen sein, anstelle der fünften und/oder zweiten Richtwalze 9.5 bzw. 9.2 die dritte Richtwalze 9.3 bzw. den zugeordneten Abtrieb 7.3 (vgl. Figur 1) der Getriebeanordnung 3 zu überwachen.

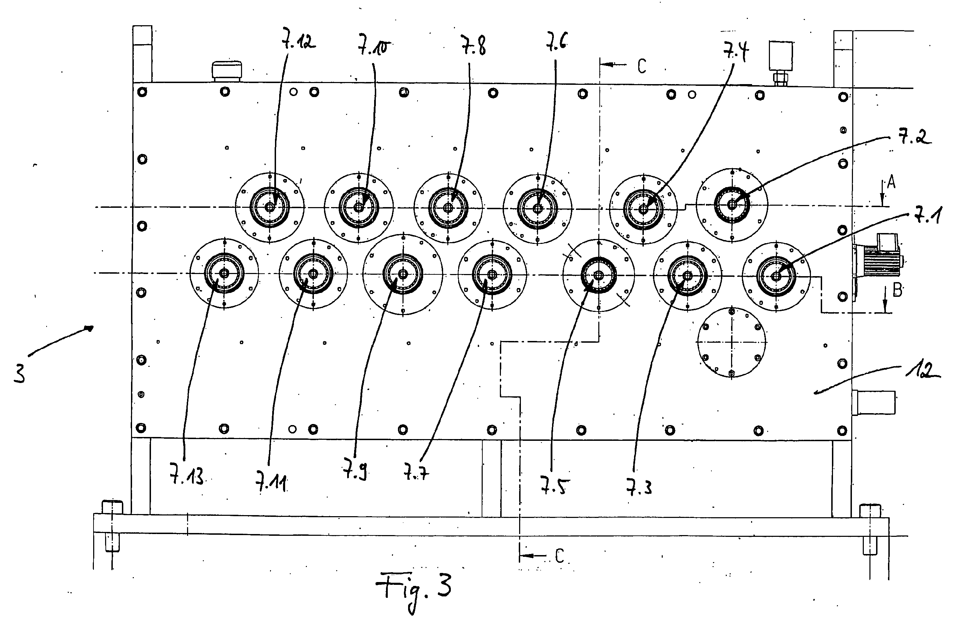

Die Figur 3 zeigt eine Frontansicht der Getriebeanordnung 3 aus Figur 1. Diese weist ein Gehäuse 12 auf, aus dem die Abtriebe 7.1, ... zum Anschließen der betreffenden Gelenkwellen 8.1, ..., (vgl. Figur 1) hervorragen. Die Abtriebe 7.1, ... weisen zu diesem Zweck geeignete Anschluss- oder Verbindungsmittel auf, die in Figur 3 nicht explizit bezeichnet sind.

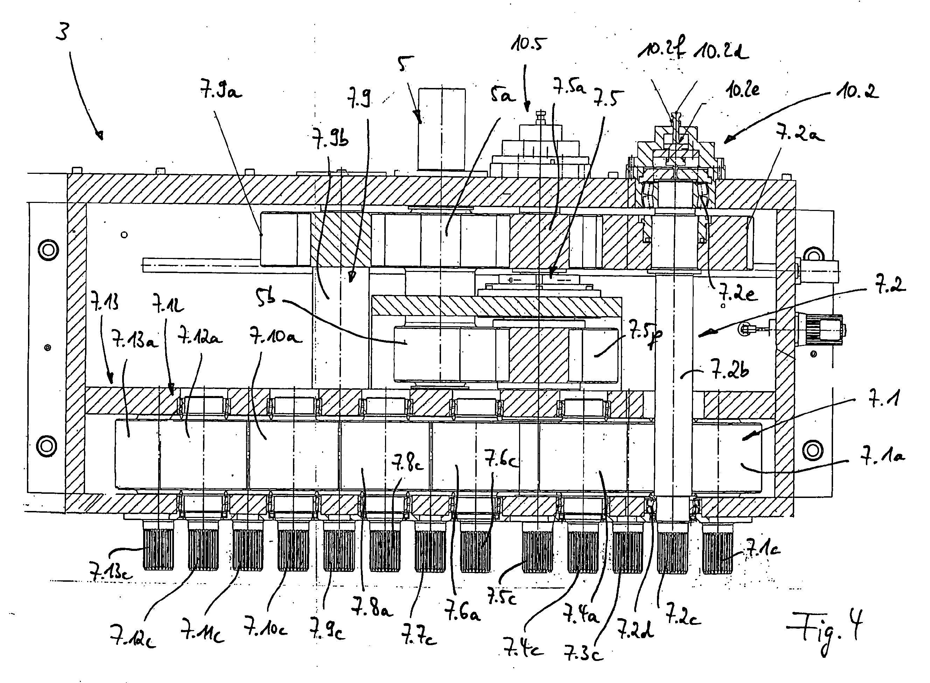

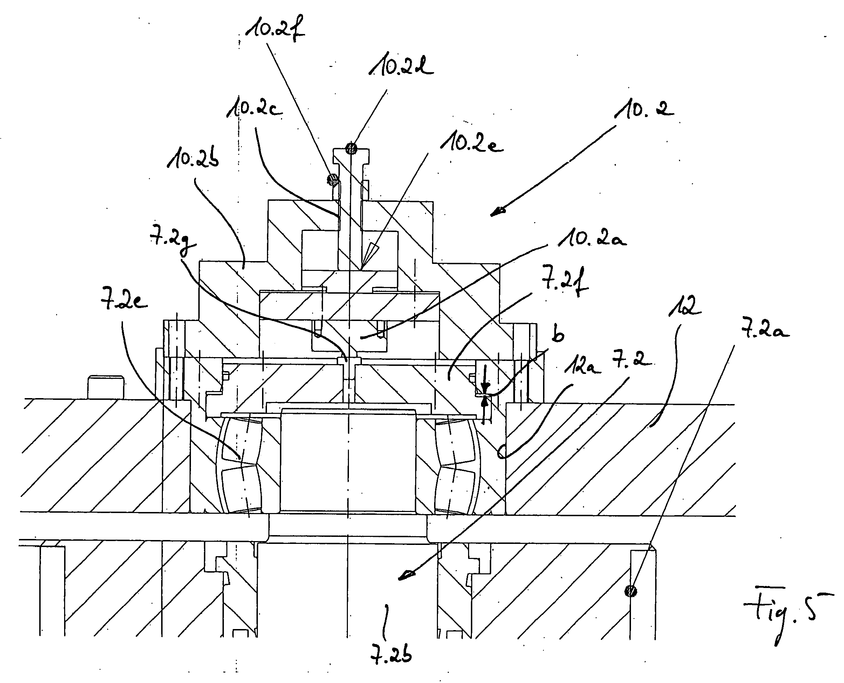

Die Figur 4 zeigt einen Schnitt entlang der Linie A-A in Figur 3. Der Antrieb 5 bzw. eine entsprechende Antriebswelle weist ein erstes Zahnrad 5a auf, das vorliegend eine äußere Schrägverzahnung, beispielsweise mit einer Linkssteigung aufweist. Dieses steht im Eingriff mit einem ersten Zahnrad 7.5a an dem fünften Abtrieb 7.5 bzw. an einer entsprechenden Abtriebswelle. Das Zahnrad 7.5a weist entsprechend eine äußere Schrägverzahnung auf, die zu derjenigen des Zahnrades 5a komplementär ist, beispielsweise in Form einer Rechtssteigung. Das Zahnrad 7.5a steht in Eingriff mit einem wiederum komplementären Zahnrad 7.2a des zweiten Abtriebs 7.2 bzw. einer entsprechenden Abtriebswelle 7.2b. Diese weist an ihrem ersten freien Ende, das aus dem Gehäuse 12 der Getriebeanordnung 3 hervorragt, geeignete Verbindungsmittel 7.2c zum Anschließen der betreffenden Gelenkwelle 8.2 (vgl. Figur 1) auf. Weiterhin ist die Abtriebswelle 7.2b mittels Wälzlagern 7.2d, 7.2e gelagert, so dass sie in axialer Richtung um ein gewisses Maß beweglich ist (vgl. Figur 5). Eine entsprechende axiale Bewegung wird im Betrieb der Getriebeanordnung 3 aufgrund der schräg verzahnten Kopplung durch den Antrieb 5 hervorgerufen, und ist ein Maß für das zum Abtrieb 7.2 wirksame Drehmoment, welches gegebenenfalls zu einer Beschädigung der entsprechenden Gelenkwelle 8.2 führen kann, wenn es einen gewissen Maximalwert übersteigt.

Um dies zu verhindern, ist an dem Abtrieb 7.2 im Bereich des anderen Endes der Abtriebswelle 7.2b eine Drehmomentüberwachungseinrichtung 10.2 (vgl. Figur 1) vorgesehen, die nachfolgend unter Bezugnahme auf die detaillierte Ausschnittsvergrößerung in Figur 5 näher erläutert wird.

Vorliegend sei noch darauf hingewiesen, dass gemäß der Darstellung in Figur 4 keine weiteren Abtriebsstränge mit dem überwachten Abtrieb 7.2 gekoppelt sind, so dass eine gemessene axiale Bewegung der Abtriebswelle 7.2b das an dem Abtrieb 7.2 wirksame Drehmoment unabhängig von den Drehmomenten anderer Abtriebe der Getriebeanordnung 3 anzeigt.

Figur 5 zeigt eine Ausschnittsvergrößerung der in Figur 4 gezeigten Drehmomentüberwachungseinrichtung 10.2 des zweiten Abtriebs 7.2. Zur Aufnahme des oberen Lagers 7.2e weist das Gehäuse 12 eine Öffnung 12a auf. Oberhalb dieses Lagers 7.2e ist ein in axialer Richtung der Abtriebswelle 7.2b beweglich gelagertes Teil 7.2f angeordnet, dessen Beweglichkeit nach oben durch komplementäre Absatzstrukturen an einem Außenteil des Lagers 7.2e und an dem beweglichen Teil 7.2f selbst auf ein Maß b begrenzt ist. Oberhalb des beweglichen Teils 7.2f ist eine Druckmessdose 10.2a angeordnet, auf die das bewegliche Teil 7.2f bei seiner axialen Bewegung mittels eines stempelförmigen Ansatzteils 7.2g an seiner Oberseite eingewirkt. Zum Einspannen der Druckmessdose 10.2a zwischen dem Ansatzteil 7.2g und einer äußeren Abdeckung 10.2b der Drehmomentüberwachungseinrichtung 10.2 ist im oberen Bereich der Abdeckung 10.2b eine Bohrung 10.2c vorgesehen, in die ein Vorspannmittel 10.2d in Form einer Schraube eingesetzt und in einer zum Vorspannen der Druckmessdose 10.2a geeigneten Stellung mittels eines Sicherungsmittels 10.2e in Form einer Mutter gekontert ist.

Die Druckmessdose 10.2a erzeugt in Abhängigkeit von der axialen Bewegung der Abtriebswelle 7.2b ein Druckmesssignal, das sich gemäß Figur 1 als Steuersignal SS2 zum Steuern der Antriebseinheit 2 der erfindungsgemäßen Richtmaschine 1 verwenden lässt. Wenn das am Abtrieb 7.2, das heißt an der Abtriebswelle 7.2b wirksame Drehmoment einen zulässigen Maximalwert übersteigt, liefert die Druckmessdose 10.2a gemäß Figur 5 ein entsprechendes Signal, das in Form des Steuersignals SS2 gemäß Figur 1 zum Abschalten der Antriebseinheit 2 genutzt werden kann, bevor es zu einer Beschädigung der Richtmaschine 1 kommt.

Die Drehmomentüberwachungseinrichtung 10.2 lässt sich derart einstellen, dass zunächst durch Anziehen der Schraube 10.2d, beispielsweise mit einem Anziehdrehmoment von 20 Nm das Spiel der Abtriebswelle 7.2b (Messwelle) herausgenommen wird. Anschließend wird die Schraube 10.2d wieder gelöst und nur von Hand angelegt. Aus dieser Stellung wird die Schraube 10.2d anschließend um ein gewisses Winkelmaß, beispielsweise um etwa 20° gegen den Uhrzeigersinn, wieder herausgedreht und in dieser Stellung mit der Mutter 10.2e gekontert.

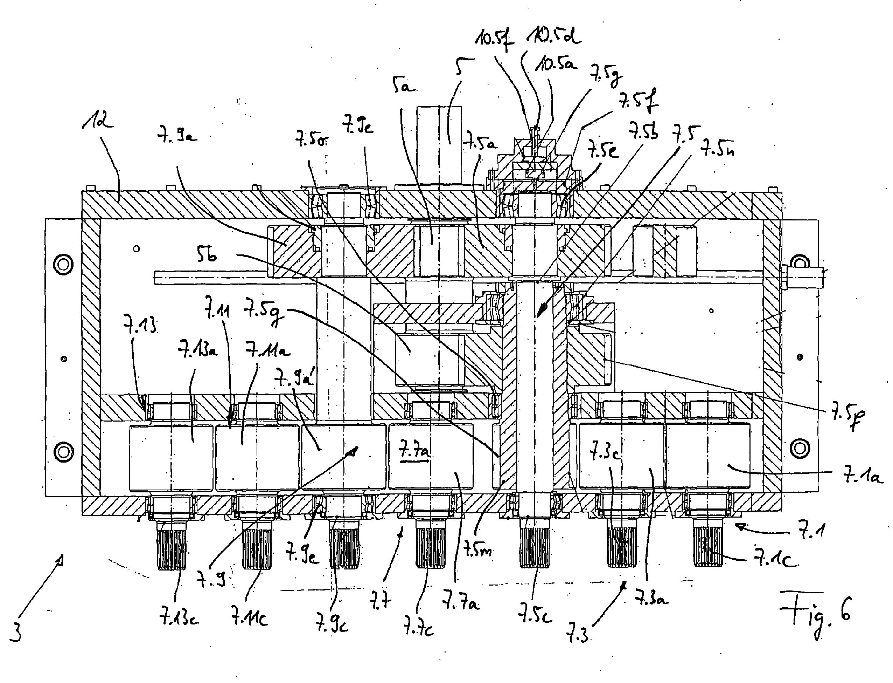

Die Figur 6 zeigt einen Schnitt entlang der Linie B-B in Figur 3. Dargestellt ist dabei insbesondere die Ausgestaltung der Getriebeanordnung 3 im Bereich des fünften Abtriebs 7.5. Dieser weist analog zur Ausgestaltung des zweiten Abtriebs 7.2 gemäß Figur 4 eine axial beweglich gelagerte Abtriebswelle 7.5b auf, an deren einem Ende eine Drehmomentüberwachungseinrichtung 10.5 angeordnet ist, die in ihrem Aufbau exakt derjenigen entspricht, die vorstehend anhand der Figur 5 für den zweiten Abtrieb 7.2 detailliert beschrieben wurde, so dass auf entsprechende Einzelheiten nicht weiter einzugehen ist.

Vorliegend werden nur die weiteren Merkmale der Getriebeanordnung 3 im Bereich des fünften Abtriebs 7.5 detailliert beschrieben:

Wie der Figur 6 zu entnehmen ist, ist die Abtriebswelle 7.5b des fünften Abtriebs 7.5 als Innenwelle ausgebildet, die in einer äußeren Hohlwelle 7.5m angeordnet ist. Die Hohlwelle 7.5m ist mittels Wälzlagern 7.5n, 7.5o innerhalb des Gehäuses 12 der Getriebeanordnung 3 gelagert, so dass eine Drehung der inneren Abtriebswelle 7.5b und der äußeren Hohlwelle 7.5m unabhängig voneinander erfolgen kann. Auf der äußeren Hohlwelle 7.5m ist ein erstes, insbesondere schräg verzahntes Zahnrad 7.5p angeordnet, das in Eingriff mit einem komplementären Zahnrad 5b des Antriebs 5 bzw. einer dazugehörigen Antriebswelle steht. Weiterhin weist die äußere Hohlwelle 7.5m noch ein weiteres, geradverzahntes Zahnrad 7.5q auf, welches direkt oder indirekt mit entsprechenden Zahnrädern 7.3a, 7.1 a der dritten und ersten Abtriebe 7.3 bzw. 7.1 koppelt.

Weiterhin zeigt die Figur 6 noch eine Abtriebswelle 7.9c des neunten Abtriebs 7.9, die erste und zweite Zahnräder 7.9a bzw. 7.9a' aufweist. Die Abtriebswelle 7.9b ist ebenfalls über Wälzlager 7.9e axial beweglich gelagert. Das Zahnrad 7.9a ist schrägverzahnt und komplementär zu dem Zahnrad 5a des Antriebs 5 ausgebildet, mit dem es in mechanischer Wirkverbindung steht. Das Zahnrad 7.9a' ist geradverzahnt ausgebildet und koppelt indirekt mechanisch mit entsprechenden Zahnrädern 7.7a, 7.11 a, 7.13a der siebten, elften und 13. Abtriebe 7.7, 7.11, 7.13.

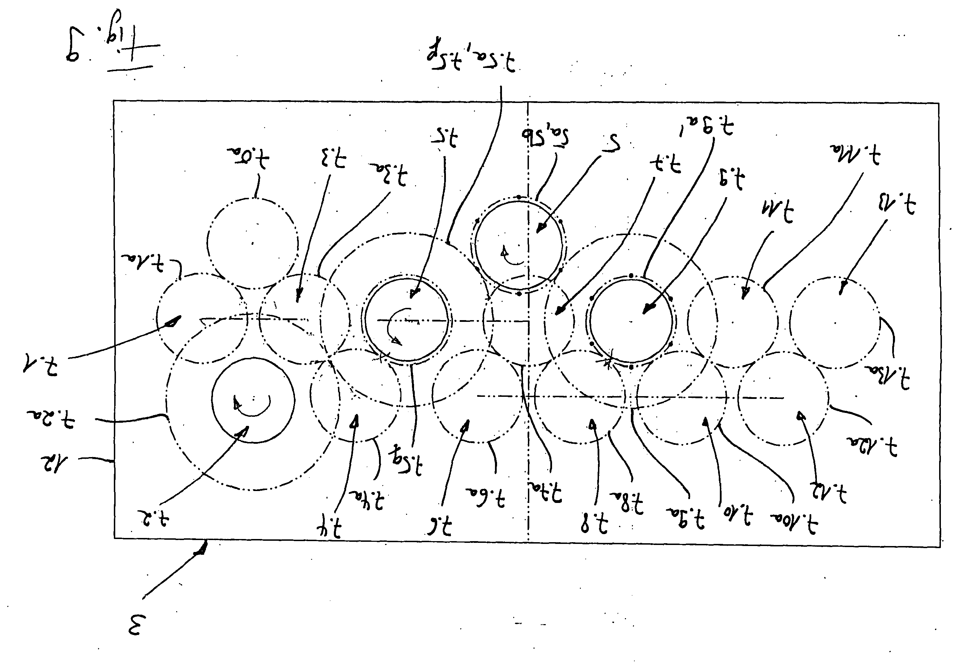

Im Betrieb der Getriebeanordnung 3 bzw. der Richtmaschine 1 gemäß Figur 1 überträgt der Antrieb 5 zunächst ein Drehmoment auf den Abtrieb 7.9, von dem aus es gemäß der Darstellung in Figur 6 auch auf die weiteren Abtriebe 7.7, 7.11 und 7.13 weiter verteilt wird. Wie sich insbesondere aus der weiter unten beschriebenen Darstellung in Figur 9 ergibt, erfolgt auf diese Weise auch eine Weiterverteilung des Drehmoments auf die Abtriebe 7.6, 7.8, 7.10 und 7.12, die jeweils entsprechende geradverzahnte Zahnräder aufweisen, die direkt und/oder indirekt mit den in Figur 6 gezeigten Zahnrädern 7.7a, 7.9a', 7.11a und 7.13a zusammenwirken. Die Abtriebe 7.6 - 7.13 sind somit miteinander gekoppelt; an ihnen findet keine Drehmomentüberwachung statt.

Weiterhin wirkt der Antrieb 5 über die Zahnräder 5b und 7.5b auf die äußere Hohlwelle 7.5m des fünften Abtriebs 7.5, von deren Zahnrad 7.5q aus das Drehmoment an die Abtriebe 7.1 und 7.3 weiterverteilt wird. Wie sich ebenfalls anhand der Figur 9 ergibt, erfolgt auf diese Weise auch ein Weiterverteilen des Drehmoments auf den Antrieb 7.4, der zu diesem Zweck ebenfalls ein entsprechendes geradverzahntes Zahnrad aufweist, das direkt und/oder indirekt mit den Zahnrädern 7.5q, 7.3a und 7.1 a wechselwirkt. Auf diese Weise sind auch die Abtriebe 7.4, 7.3 und 7.1 mechanisch gekoppelt; auch an diesen erfolgt keine Drehmomentüberwachung.

Unabhängig davon wirkt der Antrieb 5 über das Zahnrad 5a und das Zahnrad 7.5a auch auf die innere Abtriebswelle 7.5b des zweiten Abtriebs 7.5, die erfindungsgemäß als Messabtriebswelle fungiert. Im Bereich dieser Welle erfolgt keine weitere Kopplung mit anderen Abtrieben der Getriebeanordnung 3, so dass - wie weiter oben detailliert beschrieben - über die axiale Bewegung der Messabtriebswelle 7.5b eine unabhängige Drehmomentüberwachung im Bereich des fünften Abtriebs 7.5, der entsprechenden Gelenkwelle 8.5 (vgl. Figur 1) und der zugehörigen Richtwalze 9.5 stattfinden kann, die erfindungsgemäß zur Überlastsicherung einsetzbar ist.

Gleiches gilt gemäß den Ausführungen zu Figur 5 im Bereich des zweiten Abtriebs 7.2, wobei hier das Drehmoment von dem Antrieb 5 unabhängig von weiteren Abtrieben der Getriebeanordnung 3 über die Zahnräder 5a, 7.5a und 7.2a auf die als Messabtriebswelle fungierende Abtriebswelle 7.2b übertragen wird. Auch hier ist die von den weiteren Abtrieben der Getriebeanordnung unabhängige axiale Bewegung der Antriebswelle 7.2b zur Überlastsicherung für die erfindungsgemäße Richtmaschine 1 nutzbar (wie oben bereits detailliert beschrieben).

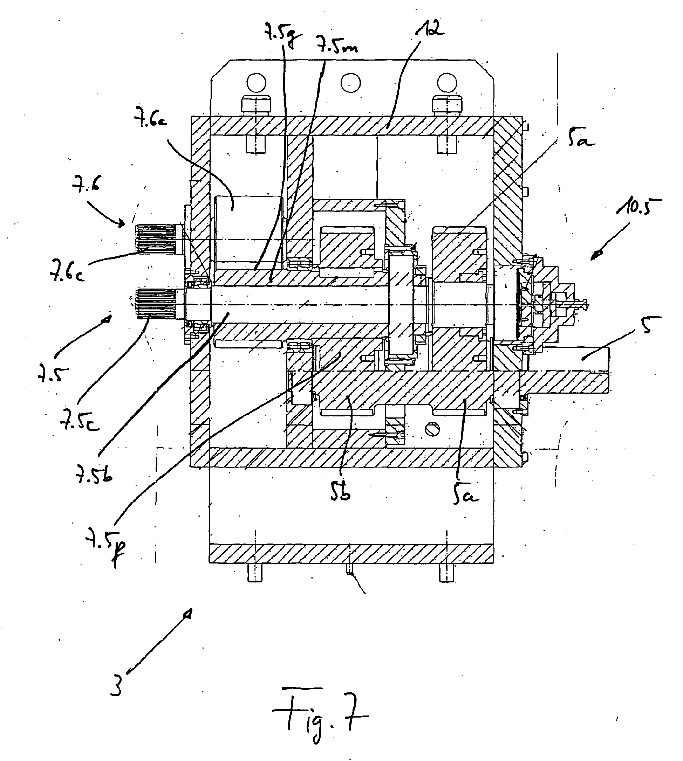

Die Figur 7 zeigt einen Schnitt entlang der Linie C-C in Figur 3. Dabei bezeichnen gleiche Bezugszeichen dieselben Elemente, wie weiter oben anhand der Figuren 3 bis 6 bereits detailliert beschrieben.

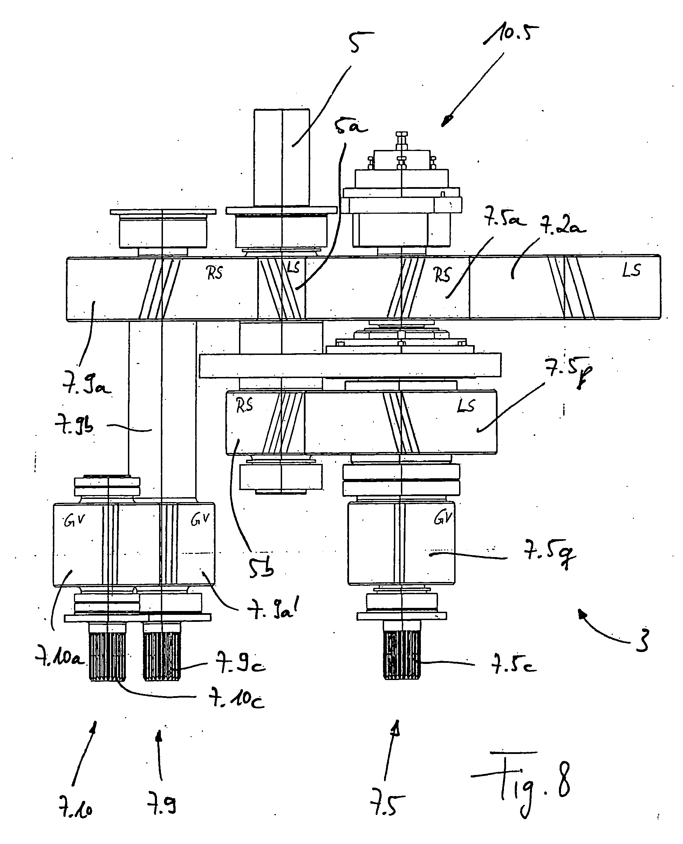

Die Figur 8 zeigt nochmals anhand einiger ausgewählter Bestandteile der Getriebeanordnung 3 die verschiedenen Kopplungsformen zur Drehmomentübertragung, wobei wiederum weiter oben bereits detailliert beschriebenen Elemente mit denselben Bezugszeichen versehen sind. Zur Darstellung in Figur 8 sei noch angemerkt, dass die Bezeichnung "LS" für eine schräge Außenverzahnung mit Linkssteigung, die Bezeichnung "RS" für eine schräge Außenverzahnung mit Rechtssteigung und die Bezeichnung "GV" für eine gerade Außenverzahnung steht. Wie der Fachmann erkennt, ist im Bereich der Zahnräder 5b und 7.5p das Vorsehen einer komplementären Schrägverzahnung RS-LS nicht unbedingt erforderlich, zur Übertragung höherer Drehmomente jedoch vorteilhaft, da über das Zahnrad 7.5q die Abtriebe 7.4, 7.3 und 7.1 mit Drehmoment versorgt werden, wobei insbesondere am Abtrieb 7.4 in der Praxis eine beträchtliche Umformarbeit zu leisten ist, was ein entsprechend hohes Drehmoment erforderlich macht. Weiterhin heben sich dadurch die Axialkräfte der Zahnradpaarungen 5a-7.9a, 5a-7.5, 5b-7.5p teilweise auf.

Die Figur 9 stellt die Kopplungsverhältnisse innerhalb der Getriebeanordnung 3 alternativ nochmals in einer schematischen Seitenansicht dar, wobei vorliegend die einzelnen Zahnräder zur Drehmomentübertragung mittels strichpunktierter Kreise dargestellt sind. Wie der Fachmann erkennt, kann es bei der gewählten Darstellung in Figur 9 vorkommen, dass Zahnräder hintereinander angeordnet sind.

Der Antrieb 5 überträgt mittels des Zahnrades 5a ein gewisses Drehmoment auf das Zahnrad 7.5a des fünften Abtriebs 7.5. Unabhängig davon wird Drehmoment auch über das Zahnrad 7.5p und das Zahnrad 7.5q übertragen, von wo aus es weiterhin zur Drehmomentbeaufschlagung der Abtriebe 7.4, 7.3 und 7.1 verwendet wird, wobei die Übertragung zwischen den Zahnrädern 7.3a und 7.1a der Abtriebe 7.3 und 7.1 unter Umgehung des Abtriebs 7.2 mittels eines weiteren, zwischengeschalteten Zahnrades 7.0a erfolgt.

Unabhängig davon wird über das Zahnrad 7.5a das Zahnrad 7.2a des zweiten Abtriebs 7.2 angetrieben, so dass der zweite Abtrieb 7.2 insoweit mechanisch von den Abtrieben 7.1 und 7.3-7.5 unabhängig ist.

Gleichzeitig wirkt der Antrieb 5 über das Zahnrad 5a noch auf das Zahnrad 7.9a des neunten Abtriebs 7.9 und von dort aus über das weitere Zahnrad 7.9a' nacheinander auf die weiteren Abtriebe 7.6-7.8 bzw. 7.10-7.13, die somit gruppenweise miteinander gekoppelt sind, wie auch die Antriebe 7.1, 7.3 und 7.4. Dagegen sind die Abtriebe 7.2 und 7.5 mechanisch unabhängig, so dass hier erfindungsgemäß eine Drehmomentüberwachung zur Überlastsicherung vorgenommen werden kann.

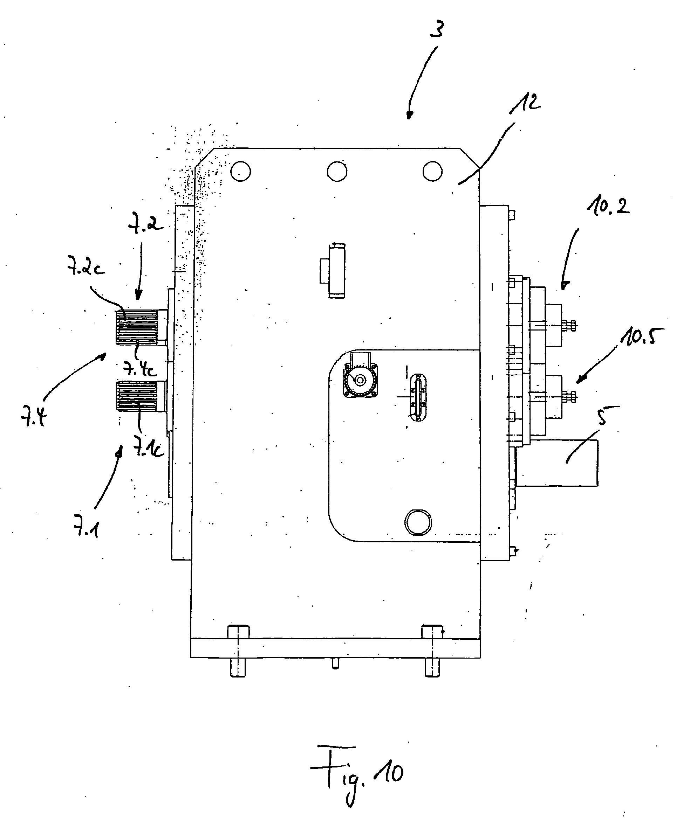

Abschließend zeigt die Figur 10 noch eine Seitenansicht der erfindungsgemä-ßen Getriebeanordnung 3, wobei wiederum bezeichneten Elemente dieselben Bezugszeichen wie in den weiter oben detailliert beschriebenen Figuren aufweisen.

## Patentansprüche

1. Getriebeanordnung (3), insbesondere für eine Richtmaschine (1), mit wenigstens einem Antrieb (5) und einer Anzahl von Abtrieben (7.1,...), die für eine Drehmomentübertragung mit dem Antrieb (5) in Wirkverbindung stehen,
**dadurch gekennzeichnet,**
**dass** wenigstens ein Abtrieb (7.2, 7.5) unabhängig von anderen Abtrieben mit einer Drehmomentüberwachungseinrichtung (10.2, 10.5) zum Überwachen eines an dem betreffenden Abtrieb (7.2, 7.5) wirksamen Abtriebsmoments gekoppelt ist und dass die Drehmomentüberwachungseinrichtung (10.2, 10.5) zum Ausgeben eines Steuersignals (SS2, SS5) in Abhängigkeit von einem Ergebnis der Abtriebsmomentüberwachung ausgebildet ist.

2. Getriebeanordnung (3) nach Anspruch 1,
**dadurch gekennzeichnet,**
**dass** das Steuersignal (SS2, SS5) ein Abschaltsignal für eine übergeordnete Antriebeinheit (2) ist, wenn das Ergebnis der Abtriebsmomentüberwachung ein Überschreiten eines vorgegebenen Grenzwerts, insbesondere eines Belastungsgrenzwerts eines mit dem betreffenden Abtrieb (7.2, 7.5) gekoppelten Drehmomentübertragungsmittels, insbesondere einer Gelenkwelle (8.2, 8.5) anzeigt.

3. Getriebeanordnung (3) nach Anspruch 1 oder 2, **dadurch gekennzeichnet, dass** der betreffende Abtrieb (7.2, 7.5) eine Messabtriebswelle (7.2b, 7.5b) aufweist, die axial beweglich in Abhängigkeit von dem wirksamen Abtriebsmoment gelagert ist, wobei die axiale Bewegung der Messabtriebswelle (7.2b, 7.5b) ein Maß für das wirksame Abtriebsmoment ist.

4. Getriebeanordnung (3) nach Anspruch 3,
**gekennzeichnet durch** Wälzlager, insbesondere **durch** eine Kombination eines Axiallagers mit einem hiervon unabhängigen Radiallager (7.2d, 7.2e; 7.5d, 7.5e) zum Lagern der Messabtriebswelle (7.2b, 7.5b).

5. Getriebeanordnung (3) nach Anspruch 3 oder 4,
**dadurch gekennzeichnet,**
**dass** die Messabtriebswelle (7.5b) als Innenwelle in einer Hohlwelle (7.5m) angeordnet ist, wobei letztere für eine Drehmomentübertragung sowohl mit dem Antrieb (5) als auch mit anderen Abtrieben (7.6-7.13) der Getriebeanordnung (3) gekoppelt ist.

6. Getriebeanordnung (3) nach einem der Ansprüche 3 bis 5,
**dadurch gekennzeichnet,**
**dass** die axiale Bewegung der Messabtriebswelle (7.2b, 7.5b) durch Wechselwirkung eines auf der Messabtriebswelle (7.2b, 7.5b) angeordneten schrägverzahnten Zahnrads (7.2a, 7.5a) mit einer ersten Steigungsrichtung mit einem mit dem Antrieb (5) gekoppelten schrägverzahnten Zahnrad (7.5a, 5a) mit einer zweiten, zu der ersten Steigungsrichtung komplementären zweiten Steigungsrichtung bewirkt wird.

7. Getriebeanordnung (3) nach einem der Ansprüche 3 bis 6,
**dadurch gekennzeichnet,**
**dass** die Messabtriebswelle (7.5b) direkt mit dem Antrieb (5) gekoppelt ist.

8. Getriebeanordnung (3) nach einem der Ansprüche 3 bis 7,
**dadurch gekennzeichnet,**
**dass** mit der Messabtriebswelle (7.2b, 7.5b) keine weiteren Abtriebswellen gekoppelt sind.

9. Getriebeanordnung (3) nach einem der Ansprüche 3 bis 8,
**dadurch gekennzeichnet,**
**dass** die Messabtriebswelle (7.2b) relativ zu einer die weiteren Abtriebswellen enthaltenden Ebene versetzt, insbesondere parallel verschoben angeordnet ist.

10. Getriebeanordnung (3) nach einem der vorhergehenden Ansprüche,
**dadurch gekennzeichnet,**
**dass** die Drehmomentüberwachungseinrichtung (10.2) einen Drucksensor (7.2g), insbesondere eine Druckmessdose zum Erzeugen des Steuersignals (SS2) umfasst.

11. Richtmaschine (1) zum Richten insbesondere platten- oder bandförmiger Materialien (11), aufweisend eine Anordnung (4) von Richtwalzen (9.1,...), zwischen denen das zu richtende Material (11) hindurch gefördert wird und die über Drehmomentübertragungsmittel, insbesondere Gelenkwellen (8.1,...) angetrieben werden, die mit einer Getriebeanordnung (3) verbunden sind,
**dadurch gekennzeichnet,**
**dass** die Getriebeanordnung (3) nach einem der Ansprüche 1 bis 10 ausgebildet ist.

12. Richtmaschine (1) nach Anspruch 11,
**dadurch gekennzeichnet,**
**dass** eine mit der Getriebeanordnung (3) gekoppelte Antriebseinheit (2) der Richtmaschine (1) durch das von der Getriebeanordnung (3) erzeugte Steuersignal (SS2, SS5) gesteuert ist.

13. Richtmaschine (1) nach Anspruch 11 oder 12,
**dadurch gekennzeichnet,**
**dass** die Richtwalzen (9.1,...) in Gruppen mit jeweils innerhalb einer Gruppe zueinander parallelen Walzenachsen angeordnet sind, wobei die Walzenachsen von Richtwalzen (9.1,...) jeweils einer Gruppe im Wesentlichen in einer gemeinsamen Ebene (E1, E2) angeordnet sind, und wobei die in Förderrichtung (F) des zu richtenden Materials (11) n-te Richtwalze (9.n) durch die als Messabtriebswelle ausgebildete Abtriebswelle (7.2b, 7,5b) der Getriebeanordnung (3) angetrieben ist.

14. Richtmaschine (1) nach Anspruch 13,
**dadurch gekennzeichnet,**
**dass** n = 2 und/oder 5, oder dass n = 3 ist.

15. Richtmaschine (1) nach Anspruch 13 oder 14,
**dadurch gekennzeichnet,**
**dass** die in Förderrichtung (F) des zu richtenden Materials (11) m-te Richtwalze (9.m) zu den weiteren Richtwalzen ihrer Gruppe versetzt, insbesondere parallel verschoben angeordnet ist, wobei insbesondere m = 2 ist.
